# EUROPÄISCHE PATENTSCHRIFT

(11) **EP 4 035 183 B1**
(45) Veröffentlichungstag und Bekanntmachung des Hinweises auf die Patenterteilung: **24.05.2023**
(21) Anmeldenummer: 20780153.1
(22) Anmeldetag: 23.09.2020
(51) Int. Cl.: G21C 9/016

(54) **SYSTEM ZUR STABILISIERUNG EINER KERNSCHMELZE IN EINEM KERNKRAFTWERK**
SYSTEM FOR STABILIZING A MELTDOWN IN A NUCLEAR POWER PLANT
SYSTÈME DE STABILISATION D'UNE FUSION DU COEUR DE RÉACTEUR DANS UNE CENTRALE NUCLÉAIRE

(30) Priorität: 26.09.2019 DE 102019126049
(43) Veröffentlichungstag der Anmeldung: 03.08.2022
(73) Patentinhaber: Framatome GmbH, 91052 Erlangen (DE)
(72) Erfinder: HUPP, Markus, 97222 Rimpar (DE); KEIM, Torsten, 08115 Lichtentanne (DE)
(74) Vertreter: Lavoix
(86) Internationale Anmeldenummer: PCT/EP2020/076521
(87) Internationale Veröffentlichungsnummer: WO 2021/058534

(56) Entgegenhaltungen:
- WO-A2-00/31746
- DE-A1- 2 459 339
- DE-A1- 4 122 153
- DE-C3- 2 459 339
- US-A- 4 442 065

## Beschreibung

Die vorliegende Erfindung betrifft ein System zur Stabilisierung einer Kernschmelze in einem Kernkraftwerk, umfassend:
- einen Reaktordruckbehälter, welcher einen Reaktorkern enthält,
- einen Sicherheitsbehälter, welcher einen Raum definiert, der unterhalb des Reaktordruckbehälters angeordnet ist,
- eine Kühlmittelzufuhrvorrichtung, die dazu eingerichtet ist, im Falle einer Detektion einer Kernschmelze, ein Kühlmittel in den Raum einzubringen,
- ein absorbierendes Material, das dazu geeignet ist, das in den Raum eingebrachte Kühlmittel zu absorbieren.

Das Dokument WO 00/31746 A2 beschreibt eine Vorrichtung zum Auffangen und Kühlen einer Schmelze.

Bei einer Kernschmelze kann es passieren, dass der Reaktordruckbehälter versagt, und in der Folge das geschmolzene Material des Kerns aus dem Reaktordruckbehälter in den durch den Sicherheitsbehälter definierten Raum unterhalb des Reaktordruckbehälters austritt.

Somit ist es im Falle einer Kernschmelze ein wichtiges Ziel, die Integrität des Sicherheitsbehälters zu erhalten, um radioaktive Freisetzungen in die Umwelt zu verhindern, oder zumindest zu begrenzen und zu kontrollieren.

Zu diesem Zweck ist es bekannt, Teile des Sicherheitsbehälters im Falle einer Detektion einer Kernschmelze mit Wasser zu fluten, um die gegebenenfalls nach dem Versagen des Reaktordruckbehälters in den Sicherheitsbehälter austretende Schmelze zu stabilisieren und dauerhaft zu kühlen.

Wenn die Schmelze jedoch mit dem Wasser in Berührung kommt, kann dies zu einer hochenergetischen Wechselwirkung des Wassers mit der Schmelze führen. Dabei können insbesondere energiereiche Dampfexplosionen entstehen, welche zu einem Versagen des Sicherheitsbehälters und/oder zum Ausfall von Geräten führen können, die für die Bewältigung der Kernschmelze und der langfristigen Folgen sehr wichtig sind.

Demnach ist es eine Aufgabe der vorliegenden Erfindung, ein verbessertes System zur Erhaltung der Integrität des Sicherheitsbehälters im Falle einer Kernschmelze bereitzustellen.

Erfindungsgemäß wird diese Aufgabe gelöst durch ein System zur Stabilisierung einer Kernschmelze in einem Kernkraftwerk gemäß Anspruch 1.

Das erfindungsgemäße System ermöglicht es, durch die Absorption des Kühlmittels im absorbierenden Material den direkten Kontakt zwischen der Schmelze und dem insbesondere flüssigen Kühlmittel zu verhindern. Somit ermöglicht es das erfindungsgemäße System, das Risiko von hochenergetischen Wechselwirkungen des Kühlmittels mit der Schmelze zu verringern, und insbesondere das Risiko von Dampfexplosionen zu begrenzen. Gleichzeitig wird durch das erfindungsgemäße System die Kühlfunktion gewährleistet, da durch den Kontakt mit der heißen Schmelze das im absorbierenden Material gebundene Kühlmittel sukzessive aus der Struktur des absorbierenden Materials herausgelöst, verdampft und an die Umgebung abgegeben wird.

Insbesondere wird die Schmelze aus dem Reaktordruckbehälter durch den Kontakt mit dem absorbierenden Material fragmentiert. Beispielsweise werden aus dem Reaktordruckbehälter austretende Schmelzstrahlen beim Auftreffen auf das mit Kühlmittel vollgesaugte absorbierende Material aufgebrochen und Bestandteile herausgelöst. Dieser Effekt wird bei der vorliegenden Erfindung insbesondere aufgrund des höheren mechanischen Widerstands des vollgesaugten absorbierenden Materials im Vergleich zum mechanischen Widerstand des Kühlmittels selbst erzielt.

Gemäß bevorzugter Ausführungsformen umfasst das erfindungsgemäße System eines, mehrere oder alle der Merkmale der Ansprüche 2 bis 15, in allen technisch möglichen Kombinationen.

Bevorzugte Ausführungsformen der Erfindung werden nun anhand der Zeichnungen im Detail beschreiben, wobei:
- die Figur 1 eine schematische Schnittansicht eines Teils eines Kernkraftwerks zeigt, welches ein erfindungsgemäßes System zur Stabilisierung einer Kernschmelze aufweist; und
- die Figuren 2 bis 4 analoge Ansichten zur Figur 1 sind, in welchen aufeinanderfolgende Schritte einer Stabilisierung einer Kernschmelze anhand des erfindungsgemäßen Systems schematisch dargestellt sind.

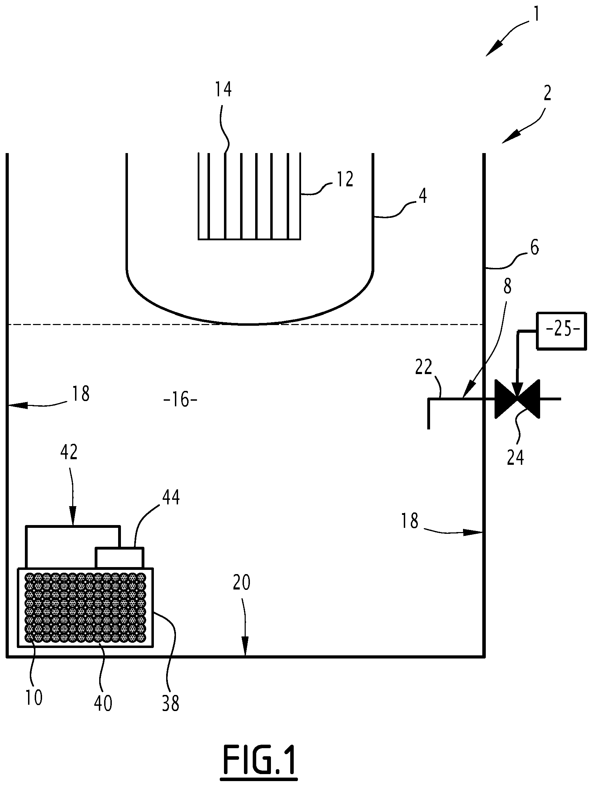

Die Figuren 1 bis 4 zeigen einen Teil eines Kernkraftwerks 1, welcher ein System 2 zur Stabilisierung einer Kernschmelze aufweist.

Das System 2 umfasst einen Reaktordruckbehälter 4, einen Sicherheitsbehälter 6, eine Kühlmittelzufuhrvorrichtung 8 und ein absorbierendes Material 10.

Die Figuren 1 bis 4 zeigen einen unteren Teil des Reaktordruckbehälters 4 und des Sicherheitsbehälters 6.

Der Reaktordruckbehälter 4 enthält einen Reaktorkern 12, welcher dazu geeignet ist, mittels eines Kernbrennstoffs eine an sich bekannte Kettenreaktion durchzuführen, welche thermische Energie für die Stromerzeugung zur Verfügung stellt. Insbesondere umfasst der Reaktorkern eine Vielzahl an Brennstäben 14, in welchen der Kernbrennstoff enthalten ist.

Der Reaktorkern 12 ist an sich bekannt, und wird in der nachfolgenden Beschreibung nicht im Detail beschrieben.

Der Sicherheitsbehälter 6 umgibt den Reaktordruckbehälter 4. Der Sicherheitsbehälter 6 definiert einen Raum 16, der unterhalb des Reaktordruckbehälters 4 angeordnet ist. Der Raum 16 ist beispielsweise nach unten durch einen Boden 20 des Sicherheitsbehälters 6 begrenzt. Der Raum 16 erstreckt sich nach oben bis zu einem unteren Ende des Reaktordruckbehälters 4.

In einem Ausführungsbeispiel ist der Raum 16 seitlich durch Seitenwände 18 des Sicherheitsbehälters 6 begrenzt.

In einem Ausführungsbeispiel (nicht dargestellt) ist der Raum 16 seitlich durch Seitenwände begrenzt, welche innerhalb des Sicherheitsbehälters 6 angeordnet sind. In diesem Ausführungsbeispiel entsprechen die Seitenwände 18 des Sicherheitsbehälters 6 insbesondere nicht den Seitenwänden des Raums 16.

Der Raum 16 hat beispielsweise ein Volumen von zwischen 50 m³ und 2000 m³.

Der Raum 16 bildet zum Beispiel eine Reaktorgrube oder einen Antriebsraum, insbesondere einen Antriebsraum für den Antrieb der Steuerstäbe zur Steuerung der Reaktion im Reaktorkern 12.

Die Kühlmittelzufuhrvorrichtung 8 ist dazu eingerichtet, ein Kühlmittel 26, und insbesondere ein vorbestimmtes Volumen an Kühlmittel 26, in den Raum 16 einzubringen, wenn eine Kernschmelze detektiert wird.

Die Kühlmittelzufuhrvorrichtung 8 umfasst eine Zuleitung 22 für die Zuleitung des Kühlmittels 26 in den Raum 16, sowie eine Kontrollvorrichtung 25 zur Kontrolle der Kühlmittelzufuhr in den Raum 16.

In dem auf den Figuren gezeigten Beispiel umfasst die Kühlmittelzufuhrvorrichtung 8 insbesondere ebenfalls eine in der Zuleitung 22 angeordnete Absperrvorrichtung 24. Die Absperrvorrichtung 24 weist insbesondere einen geschlossenen Zustand auf, in der sie die Zuleitung 22 verschließt, und somit die Zufuhr von Kühlmittel in den Raum 16 durch die Zuleitung 22 verhindert, und einen geöffneten Zustand, in dem sie die Zufuhr von Kühlmittel in den Raum 16 durch die Zuleitung 22 erlaubt. In diesem Beispiel ist die Kontrollvorrichtung 25 insbesondere dazu geeignet, den Zustand der Absperrvorrichtung 24 zu steuern.

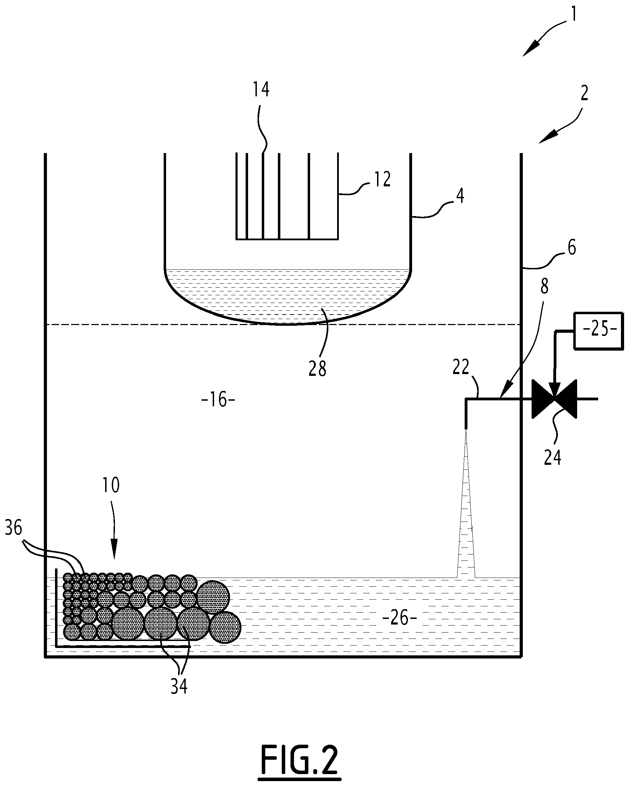

Die Kontrollvorrichtung 25 ist insbesondere dazu eingerichtet, ein Signal zu empfangen, welches eine Kernschmelze anzeigt, und die Absperrvorrichtung 24 in Folge des Empfangs eines derartigen Signals derart zu steuern, dass Kühlmittel 26, und insbesondere ein vorbestimmtes Volumen an Kühlmittel 26, durch die Zuleitung 22 in den Raum 16 eingebracht wird. Dies ist insbesondere in Figur 2 dargestellt. Dabei ist die Kontrollvorrichtung 25 insbesondere dazu eingerichtet, die Absperrvorrichtung 24 von ihrem geschlossenen Zustand in ihren geöffneten Zustand zu versetzen.

Das von der Kontrollvorrichtung 25 empfangene, eine Kernschmelze anzeigende, Signal wird insbesondere von einem Kontrollsystem (nicht dargestellt) des Kernkraftwerks 1 erzeugt. Das Kontrollsystem des Kernkraftwerks 1 ist beispielsweise dazu eingerichtet, auf an sich bekannte Weise, eine Kernschmelze festzustellen.

Gemäß einem Ausführungsbeispiel ist das Kontrollsystem des Kernkraftwerks 1 insbesondere dazu eingerichtet, eine Kernschmelze gemäß kraftwerksspezifischer Bedingungen zu signalisieren, wie beispielsweise einem Kraftwerkstyp und/oder Anforderungen der nationalen Sicherheitsbehörde.

Beispielsweise ist die Kontrollvorrichtung 25 dazu eingerichtet, eine Kernschmelze durch Messung einer Kühlmitteltemperatur an einem Auslass des Reaktorkerns festzustellen. Gemäß einem Ausführungsbeispiel ist das Kontrollsystem des Kernkraftwerks 1 insbesondere dazu eingerichtet, eine Kernschmelze zu signalisieren, wenn die am Auslass erfasste Kühlmitteltemperatur eines Kühlmittels des Reaktorkerns 12 größer als 650°C ist.

Das Kühlmittel 16 ist insbesondere eine Kühlflüssigkeit, insbesondere Wasser. Gemäß alternativer Ausführungsbeispiele ist das Kühlmittel 16 eine beliebige Kühlflüssigkeit, welche dazu geeignet ist, die Kernschmelze abzukühlen und einen unterkritischen Zustand des Kernmaterials sicherzustellen.

Das absorbierende Material 10 ist dazu geeignet, das in den Raum 16 eingebrachte Kühlmittel 26 zu absorbieren und sich bei Absorption des Kühlmittels 26 auszudehnen.

insbesondere weist das absorbierende Material 10 eine feste Phase und das Kühlmittel 26 eine flüssige Phase auf.

Unter "absorbieren" oder "Absorption" wird der chemische Begriff der Absorption verstanden. Beispielsweise wird unter "absorbieren" oder "Absorption" die Aufnahme des Kühlmittels 26, insbesondere der Moleküle des Kühlmittels 26, in der festen Phase des absorbierenden Materials 10 verstanden. Beispielsweise bezeichnet "absorbieren" oder "Absorption" eine Aufnahme des Kühlmittels 26 in Poren oder Einbettung des Kühlmittels 26 in die Molekülstruktur des absorbierenden Materials 10. Insbesondere bezeichnet dies nicht eine Anlagerung der Moleküle des Kühlmittels 26 an der Oberfläche absorbierenden Materials, was als Absorption bezeichnet wird.

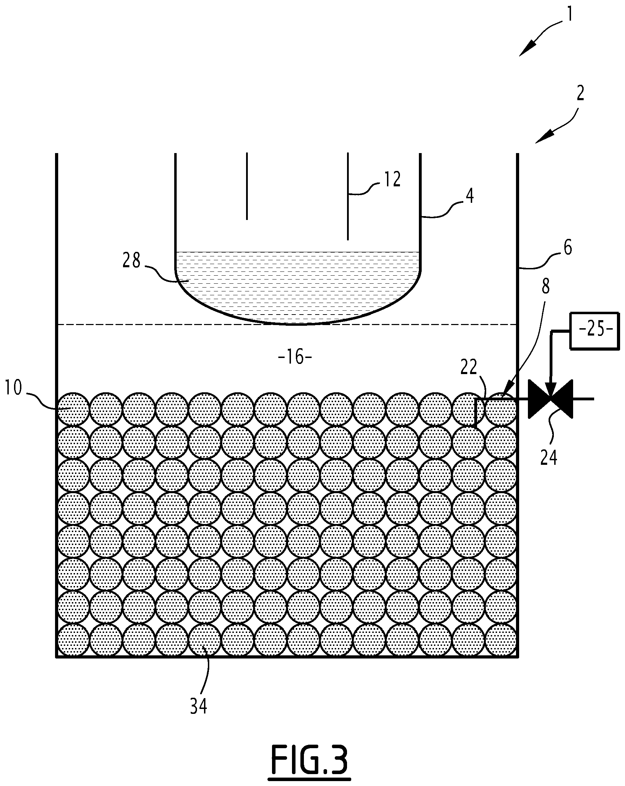

Insbesondere ist das absorbierende Material 10 dazu geeignet, in einem trockenen Zustand ein erstes Volumen einzunehmen (siehe Figur 1) und in einem aufgequollenen Zustand ein zweites Volumen einzunehmen (siehe Figur 3).

Unter "trockenem Zustand" versteht man einen Zustand, in dem der Wassergehalt des absorbierenden Materials 10 im Gleichgewicht mit der umgebenden Atmosphäre mit einer relativen Feuchtigkeit von kleiner als 70 % steht. Während des normalen Betriebs des Reaktors befindet sich das absorbierende Material im trockenen Zustand.

Der "aufgequollene Zustand" entspricht einem Zustand, in dem das in den Raum 16 eingebrachte vorbestimmte Volumen an Kühlmittel 26 im absorbierenden Material 10 absorbiert, und insbesondere vollständig absorbiert, worden ist.

Die chemische Zusammensetzung des absorbierenden Materials 10 wird insbesondere in Abhängigkeit von einem oder mehreren der folgenden Kriterien ausgewählt: Absorptionskapazität, Volumenzunahme, Absorptionsgeschwindigkeit, Temperaturbeständigkeit, Strahlungsfestigkeit. Zusätzlich oder alternativ kann auch eines oder mehrere der folgenden Kriterien berücksichtigt werden: Beständigkeit gegen Säuren/Laugen, mechanische Stabilität, Rate einer Kühlmittelfreisetzung, Fähigkeit zur Fragmentierung der Schmelze, Verhinderung von Re-Kritikalität, wobei die Kritikalität einen Zustand des Reaktorkerns 12 beschreibt, in dem pro Zeiteinheit ebenso viele freie Neutronen erzeugt werden, wie durch Absorption und Leckage verschwinden.

Bezüglich des Kriteriums der Absorptionskapazität soll das absorbierende Material 10 dazu geeignet sein, das vorbestimmte Kühlmittelvolumen vollständig zu absorbieren, und insbesondere im aufgequollenen Zustand eine ausreichende Kühlung der Schmelze 28 zu ermöglichen.

Es wird insbesondere ein absorbierendes Material 10 ausgewählt, welches dazu geeignet ist, ein Volumen des Kühlmittels 26 zu absorbieren, das zwischen dem Zehnfachen und dem Fünfhundertfachen des Volumens des absorbierenden Materials 10 im trockenen Zustand liegt.

Zusätzlich oder alternativ wird ein absorbierendes Material 10 ausgewählt, dass dazu geeignet ist, eine Masse des Kühlmittels 26 aufzunehmen, welche mindestens dem Fünffachen der Masse des absorbierenden Materials 10 im trockenen Zustand entspricht

Bezüglich des Kriteriums der Volumenzunahme wird das absorbierende Material 10 beispielsweise derart ausgewählt, dass sich sein Volumen durch Absorbieren von Kühlmittel 26 zumindest um ein Zehnfaches erhöht, und insbesondere zwischen dem Zehnfachen und dem Fünfhundertfachen des Volumens des absorbierenden Materials 10 im trockenen Zustand liegt. Insbesondere wird das absorbierende Material 10 derart ausgewählt, dass das zweite Volumen mindestens zehn Mal größer ist als das erste Volumen. Insbesondere ist das zweite Volumen zwischen zehn und fünfhundert Mal größer als das erste Volumen.

Zusätzlich oder alternativ kann das absorbierende Material 10 derart ausgewählt werden, dass es beim Absorbieren des Kühlmittels 26 eine Volumenveränderung gemäß eines degressiven Zeitverlaufs aufweist. Beispielsweise ist das absorbierende Material 10 derart ausgebildet, dass die Volumenveränderungsrate während der ersten 10 % der Dauer der Absorption des Kühlmittels 26 maximal ist.

Bezüglich der Absorptionsgeschwindigkeit wird das absorbierende Material 10 beispielsweise derart ausgewählt, dass das in den Raum 16 eingebrachte vorbestimmte Kühlmittelvolumen 26 innerhalb eines Zeitraums von zwischen einer Minute und zehn Stunden absorbiert wird.

Bezüglich der Strahlungsfestigkeit, wird das absorbierende Material 10 zum Beispiel derart ausgewählt, dass es einer Strahlenbelastung von mindestens 30 Gray pro Stunde standhält.

Bezüglich der Temperaturbeständigkeit, wird das absorbierende Material 10 zum Beispiel derart ausgewählt, dass es einer Temperatur von mindestens 100 °C standhält

Die oben genannten bevorzugten Auswahlkriterien für das absorbierende Material 10 können beliebig kombiniert werden.

Geeignete Materialien, aus denen das absorbierende Material 10 bestehen kann, sind beispielsweise ausgewählt aus: organischen Materialien, zum Beispiel Polyacrylsäure, anorganischen Materialien, zum Beispiel Bentonit und/oder Verbundmaterialien, zum Beispiel gebildet aus einer Mischung von einem oder mehreren organischen und einem oder mehreren anorganischen Materialien.

Im Falle eines Verbundmaterials ist beispielsweise der Anteil von organischem und anorganischem Material in Abhängigkeit von einem oder mehreren der oben genannten Kriterien zu wählen.

Beispielsweise umfasst das absorbierende Material 10 vernetzte, polare Polymere. Diese Polymere werden zum Beispiel als Co-polymere aus zwei Monomeren, Acrylsäure und Acrylamid, in variierenden Verhältnissen gebildet. Des Weiteren ist das absorbierende Material 10 zum Beispiel durch Kernvernetzer chemisch wasserunlöslich gemacht. Beispielsweise ist das absorbierende Material 10 chemisch durch Oberflächen-Nachvernetzung in eine Endstruktur gebracht, die einen insbesondere begrenzten Widerstand gegen äußere mechanische Belastungen erzeugt.

insbesondere sind sogenannte "Superabsorber" als Materialien für das absorbierende Material 10 geeignet.

Bevorzugt, und wie in den Figuren 1 bis 4 gezeigt, besteht das absorbierende Material 10 aus einer Vielzahl von Einzelpartikeln 34, wobei jeder Einzelpartikel 34 dazu geeignet ist, einen Teil des Kühlmittels 26 zu absorbieren und sich dabei auszudehnen. Somit resultiert die Ausdehnung des absorbierenden Materials 10 aus der Ausdehnung der Einzelpartikel 34, aus denen es besteht. Im aufgequollenen Zustand ist bevorzugt das gesamte eingebrachte Kühlmittelvolumen durch die Einzelpartikel 34 absorbiert worden, sodass die Zwischenräume zwischen den Einzelpartikeln 34 mit Gas gefüllt sind und im Wesentlichen frei von Kühlmittel sind. Das Gas entspricht dem Gas, welches die Atmosphäre des Sicherheitsbehälters 6 bildet, zum Beispiel Luft oder Stickstoff.

Dieses Verhalten wird beispielsweise beim Vergleich der Figuren 1, 2 und 3 sichtbar. Die Figur 1 zeigt die Einzelpartikel 34 im trockenen Zustand. In der Figur 2 haben sich einige Partikel 34 durch Absorption von Kühlmittel 26 ausgedehnt und weisen somit ein größeres Volumen als im trockenen Zustand auf. Figur 3 zeigt einen Zustand, in der das gesamte eingebrachte Kühlmittel 26 von den Einzelpartikeln 34 absorbiert wurde, wodurch sich alle Einzelpartikel zu einem aufgequollenen Zustand ausgedehnt haben.

Beispielswiese weist jeder Einzelpartikel im trockenen Zustand einen Mindestdurchmesser zwischen 0.1 und 5 mm auf.

Vorzugsweise sind die Einzelpartikel 34, insbesondere im trockenen Zustand, nicht miteinander verbunden.

Jeder Einzelpartikel 34 weist beispielsweise eine Kugelform auf. In einem anderen Beispiel weisen die Einzelpartikel 34 unregelmäßige Formen auf.

Vorzugsweise ist das absorbierende Material 10 im trockenen Zustand in körniger oder pulverförmiger Form, wobei jedes Einzelpartikel 34 durch ein einzelnes Korn oder Pulverpartikel gebildet wird.

Im Ausführungsbeispiel der Figuren 1 bis 4 weist das System 2 ferner einen Behälter 38 auf, welcher das absorbierende Material 10 enthält. Insbesondere ist das absorbierende Material 10 im Behälter 38 im trockenen Zustand gelagert.

Der Behälter 38 ist insbesondere in unmittelbarer Nähe des Reaktordruckbehälters 4 angeordnet. Insbesondere ist der Behälter 38 im Sicherheitsbehälter 6 angeordnet. Vorzugsweise ist der Behälter 38 in dem Raum 16, insbesondere unterhalb des Reaktordruckbehälters 4, angeordnet. Der Behälter 38 kann auch in anderen geeigneten Räumen angeordnet sein.

Der Behälter 38 weist einen geschlossenen und einen geöffneten Zustand auf.

Im geschlossenen Zustand ist der Behälter 38 verschlossen, insbesondere hermetisch verschlossen. Unter "hermetisch verschlossen" wird verstanden, dass der Behälter 38 einen Austausch von Gasen oder Flüssigkeiten zwischen einem Innenraum des Behälters 38 und der Atmosphäre außerhalb des Behälters 38 unterbindet.

Im geöffneten Zustand kann das im Behälter 38 enthaltene absorbierende Material 10 zum Beispiel unter dem Einfluss der Schwerkraft aus dem Behälter 38 auslaufen.

Beispielsweise umfasst der Behälter 38 eine Auslauföffnung und einen Deckel, welcher diese Auslauföffnung im geschlossenen Zustand verschließt. Im geöffneten Zustand ist der Deckel geöffnet und erlaubt das Auslaufen des absorbierenden Materials 10 aus dem Behälter 38 durch die Auslauföffnung.

Im geschlossenen Zustand des Behälters 38 wird das absorbierende Material 10 im Behälter 38 unter einer Schutzgasatmosphäre 40 gelagert, wobei die Schutzgasatmosphäre dazu geeignet ist, das absorbierende Material 10 vor einer Aufnahme von Feuchtigkeit, insbesondere von Luftfeuchtigkeit, zum Beispiel aus dem Sicherheitsbehälter 6, zu schützen. Das Schutzgas ist beispielsweise Stickstoff oder ein Edelgas wie Argon. Insbesondere verhindert das Schutzgas, dass das Material 10 während der Lagerung im Behälter 38 im geschlossenen Zustand einer Atmosphäre mit mehr als 70 % relativer Feuchtigkeit ausgesetzt ist.

Insbesondere ist der Behälter 38 während eines normalen Betriebs des Reaktors im geschlossenen Zustand. In diesem Zustand ist das absorbierende Material 10 insbesondere im Behälter 38 im trockenen Zustand gelagert.

Unter "normalem Betrieb" wird ein Betrieb verstanden, in dem der Reaktordruckbehälter 4, und insbesondere der Reaktorkern 12, eine Temperatur aufweist, welche im Rahmen einer Vorgabetemperaturspanne für den Betrieb ist.

In dem abgebildeten Beispiel umfasst das System 2 des Weiteren einen Öffnungsmechanismus 42 (insbesondere in Figur 1 sichtbar) zum Öffnen des Behälters 38. Dieser Öffnungsmechanismus 42 ist dazu eingerichtet, den Behälter 38 in den geöffneten Zustand zu versetzen, wenn ein, einer Kernschmelze entsprechendes, Signal, durch den Öffnungsmechanismus empfangen wird.

Beispielsweise weist der Öffnungsmechanismus 42 einen Elektromagneten 44 auf. In diesem Beispiel ist der Elektromagnet 44 dazu eingerichtet, den Deckel des Behälters 38 verschlossen zu halten, indem er eine entsprechende Verschlusskraft auf den Deckel ausübt, solange ihm ein entsprechender elektrischer Strom zugeführt wird. Bei einer Unterbrechung des elektrischen Stroms zum Elektromagneten 44 fällt die Verschlusskraft durch den Elektromagneten weg, und der Deckel öffnet sich, beispielsweise durch eine entsprechende Anordnung eines elastischen Rückstellorgans, beispielsweise einer Feder, oder durch ein Eigengewicht des Deckels. Die Stromversorgung wird, zum Beispiel batteriegestützt, bis zum Eintritt in eine Kernschmelze aufrechterhalten.

Der Behälter 38 ist bevorzugt derart angeordnet, dass das im geöffneten Zustand aus dem Behälter 38 auslaufende absorbierende Material 10 in den Raum 16 unterhalb des Reaktordruckbehälters 4 gelangt.

Im aufgequollenen Zustand erstreckt sich das absorbierende Material 10 wie in Figur 3 gezeigt vorzugsweise unterhalb des Reaktordruckbehälters 4, sodass der entstehende Schmelzstrahl 30 auf das absorbierende Material 10 auftrifft, und füllt mehr als die Hälfte des Volumens des Raums 16.

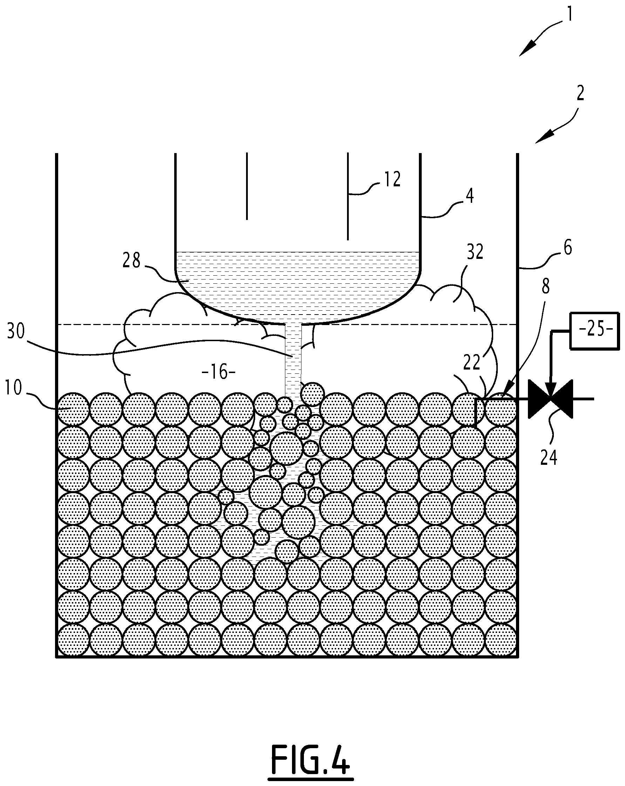

Im aufgequollenen Zustand ist das absorbierende Material 10 somit dazu geeignet, einen darauf auftreffenden Schmelzstrahl 30 durch direkten Kontakt abzukühlen und zu fragmentieren (siehe Figur 4). Beispielsweise wird der Schmelzstrahl 30 durch den Kontakt mit dem absorbierenden Material 10 aufgebrochen und die Schmelze 28 zum Erstarren gebracht.

Insbesondere ist das absorbierende Material 10 im aufgequollenen Zustand dazu geeignet, einen Teil des Kühlmittels 26 bei einer Erhitzung des absorbierenden Materials 10 durch die Schmelze 28 abzugeben, insbesondere in Form von gasförmigem Kühlmittel 32, wie zum Beispiel Wasserdampf.

Insbesondere ist das absorbierende Material 10 im aufgequollenen Zustand dazu geeignet, durch den Kontakt mit der heißen Schmelze 28 das im absorbierenden Material 10 gebundene Kühlmittel 26 sukzessive aus der Struktur des absorbierenden Materials 10 herauszulösen und verdampfen zu lassen. Das entweichende gasförmige Kühlmittel 32 trägt insbesondere zur weiteren Fragmentierung der Schmelze 28 bei.

Ein Verfahren zur Stabilisierung der Schmelze wird im Folgenden beschrieben.

Das Verfahren umfasst die folgenden, aufeinanderfolgenden Schritte: einen Lagerungsschritt, einen Einbringungsschritt des Kühlmittels 26, einen Absorptionsschritt und einen Stabilisierungsschritt.

Während des Lagerungsschritts funktioniert der Reaktor im normalen Betrieb.

Während des Lagerungsschritts wird das absorbierende Material 10 gelagert. Beispielsweise wird das absorbierende Material 10 innerhalb des Sicherheitsbehälters 6 gelagert.

Wie in Figur 1 dargestellt, ist das absorbierende Material 10 während des Lagerungsschritts vorzugsweise im Behälter 38 angeordnet. Der Behälter 38 ist verschlossen, insbesondere hermetisch verschlossen. Beispielsweise hält der Öffnungsmechanismus 42 den Behälter 38 verschlossen. Das absorbierende Material 10 im Behälter 38 ist im trockenen Zustand. Beispielsweise ist es unter der Schutzgasatmosphäre 40 im Behälter 38 gelagert.

Während des Einbringungsschritt des Kühlmittels 26 bringt, wie in Figur 2 dargestellt, die Kühlmittelzufuhrvorrichtung 8 das Kühlmittel 26, insbesondere das vorbestimmte Kühlmittelvolumen, in den Raum 16 ein. Insbesondere öffnet dazu die Kontrollvorrichtung die Absperrvorrichtung 24 der Kühlmittelzufuhrvorrichtung 8, sodass das Kühlmittel 26 in den Raum 16 strömt.

Zusätzlich wird in diesem Schritt der Behälter 38, zum Beispiel durch Unterbrechung des elektrischen Stroms zum Elektromagneten 44, geöffnet, so dass das im geöffneten Zustand aus dem Behälter 38 auslaufende absorbierende Material 10 ebenfalls in den Raum 16 gelangt.

Der Einbringungsschritt wird ausgeführt, wenn eine Kernschmelze detektiert wird, insbesondere wenn die Kontrollvorrichtung 25 ein einer Kernschmelze entsprechendes Signal, zum Beispiel vom Kontrollsystem des Kernkraftwerks 1 empfängt.

Während des Absorptionsschritts absorbiert, wie in Figur 3 dargestellt, das absorbierende Material 10 das Kühlmittel 26. Dabei dehnt sich das absorbierende Material 10 aus.

Während des Stabilisierungsschritts tritt, wie in Figur 4 dargestellt, die aus dem Reaktorbehälter austretende Schmelze 28 in Kontakt mit dem aufgequollenen absorbierenden Material.

Insbesondere trifft während dieses Schrittes der Schmelzstrahl 30 auf das absorbierende Material 10, welches den Schmelzstrahl 30 fragmentiert. Das absorbierende Material 10 kühlt die Schmelze 28 des Schmelzstrahls 30 durch direkten Kontakt ab. Insbesondere gibt das absorbierende Material 10 einen Teil des Kühlmittels 28, welches absorbiert ist, bei einer Erhitzung des absorbierenden Materials 10 durch die Schmelze 28 ab, insbesondere in Form von gasförmigem Kühlmittel 32, wie zum Beispiel Wasserdampf.

Das absorbierende Material 10 verringert beispielsweise sein Volumen bei einer Abgabe des Kühlmittels, wie insbesondere in Figur 4 gezeigt.

Durch die Wärmeabgabe an das vom Absorbermaterial abgegebene Kühlmittel 32 wird die Schmelze 28 stabilisiert.

Das erfindungsgemäße System 2 ermöglicht es, durch die Absorption des Kühlmittels 26 im absorbierenden Material 10 den direkten Kontakt zwischen der Schmelze 28 und dem Kühlmittel 26 zu verhindern. Somit ermöglicht es das erfindungsgemäße System 2, das Risiko von hochenergetischen Wechselwirkungen des Kühlmittels mit der Schmelze 28 zu verringern, und insbesondere das Risiko von Dampfexplosionen zu begrenzen.

Gleichzeitig wird durch das erfindungsgemäße System die Kühlfunktion gewährleistet, da durch den Kontakt mit der heißen Schmelze 28 das im absorbierenden Material 10 gebundene Kühlmittel 26 sukzessive aus der Struktur des absorbierenden Materials 10 herausgelöst, verdampft und an die Umgebung abgegeben wird.

Insbesondere wird die Schmelze 28 aus dem Reaktordruckbehälter 4 durch den Kontakt mit dem aufgequollenen absorbierenden Material 10 fragmentiert.

Beispielsweise werden aus dem Reaktordruckbehälter 4 austretende Schmelzstrahlen 30 beim Auftreffen auf das mit Kühlmittel 26 vollgesaugte absorbierende Material 10 aufgebrochen und Bestandteile herausgelöst. Dieser Effekt wird bei der vorliegenden Erfindung insbesondere aufgrund des höheren mechanischen Widerstands des vollgesaugten absorbierenden Materials 10 im Vergleich zum mechanischen Widerstand des Kühlmittels 26 selbst erzielt. Des Weiteren ist das absorbierende Material 10 insbesondere in seinem vollgesaugten Zustand dazu geeignet, den Schmelzstrahl 30 aufzubrechen, da es zwischen den Partikeln mit Gas gefüllte Räume bereitstellt, wobei das Gas entsprechend der Atmosphäre des Raumes 16 beispielsweise Luft oder Stickstoff ist.

## Patentansprüche

1. System (2) zur Stabilisierung einer Kernschmelze in einem Kernkraftwerk (1), umfassend:
- einen Reaktordruckbehälter (4), welcher einen Reaktorkern (12) enthält,
- einen Sicherheitsbehälter (6), welcher einen Raum (16) definiert, der unterhalb des Reaktordruckbehälters (4) angeordnet ist,
- eine Kühlmittelzufuhrvorrichtung (8), die dazu eingerichtet ist, im Falle einer Detektion einer Kernschmelze, ein Kühlmittel (26) in den Raum (16) einzubringen,
- ein absorbierendes Material (10), das dazu geeignet ist, das in den Raum (16) eingebrachte Kühlmittel (26) zu absorbieren,
**dadurch gekennzeichnet, dass** das absorbierende Material (10) dazu geeignet ist, sich bei Absorption des Kühlmittels (26) auszudehnen.

2. System (2) nach Anspruch 1, wobei das absorbierende Material (10) mehrere Einzelpartikel (34, 36) umfasst, wobei jedes Einzelpartikel (34, 36) dazu geeignet ist, sich bei Absorption des Kühlmittels (26) auszudehnen.

3. System (2) nach Anspruch 2, wobei das absorbierende Material (10) im trockenen Zustand ein körniges oder pulverförmiges Material ist.

4. - System (2) nach einem der vorhergehenden Ansprüche, wobei das absorbierende Material (10) dazu geeignet ist, dass sich sein Volumen durch Absorbieren von Kühlmittel zumindest um ein Zehnfaches erhöht.

5. System (2) nach einem der Ansprüche 1 bis 4, wobei das absorbierende Material (10) dazu geeignet ist, ein Kühlmittelvolumen (26) zu absorbieren, das zwischen dem Zehnfachen und dem Fünfhundertfachen des Volumens des absorbierenden Materials (10) im trockenen Zustand liegt.

6. System (2) nach einem der vorhergehenden Ansprüche, wobei das absorbierende Material (10) dazu geeignet ist, eine Kühlmittelmasse (26) aufzunehmen, welche mindestens dem Fünffachen der Masse des absorbierenden Materials (10) im trockenen Zustand entspricht.

7. System (2) nach einem der vorhergehenden Ansprüche, wobei die Kühlmittelzufuhrvorrichtung (8) dazu eingerichtet ist, im Falle einer Detektion einer Kernschmelze, ein vorbestimmtes Volumen an Kühlmittel (26) in den Raum (16) einzubringen.

8. System (2) nach Anspruch 7, wobei das absorbierende Material (10) dazu geeignet ist, in einem trockenen Zustand ein erstes Volumen einzunehmen, und in einem aufgequollenen Zustand, in dem das vorbestimmte Volumen an Kühlmittel (26) im absorbierenden Material (10) absorbiert ist, ein zweites Volumen einzunehmen, wobei das zweite Volumen mindestens zehn Mal größer ist als das erste Volumen.

9. System (2) nach Anspruch 7 oder 8, wobei das absorbierende Material (10) dazu geeignet ist, das vorbestimmte Volumen an Kühlmittel (26) innerhalb eines Zeitraums von zwischen einer Minute und zehn Stunden zu absorbieren.

10. System (2) nach einem der vorhergehenden Ansprüche, wobei das System (2) ferner einen Behälter (38) umfasst, in welchem das absorbierende Material (10) enthalten ist.

11. System (2) nach Anspruch 10, wobei der Behälter (38) verschließbar ist, und vorzugsweise hermetisch verschließbar ist.

12. System (2) nach einem der Ansprüche 10 oder 11, wobei das System (2) ferner einen Öffnungsmechanismus (42) zum Öffnen des Behälters (38) umfasst, wobei das absorbierende Material (10) dazu geeignet ist, beim Öffnen des Behälters (38) aus dem Behälter (38) auszulaufen.

13. System (2) nach einem der Ansprüche 10 bis 12, wobei das absorbierende Material (10) im Behälter (38) unter einer Schutzgasatmosphäre (40) gelagert ist, wobei die Schutzgasatmosphäre (40) dazu geeignet ist, das absorbierende Material vor einer Raumatmosphäre mit mehr als 70 % relativer Feuchtigkeit zu schützen.

14. System (2) nach einem der vorhergehenden Ansprüche, wobei das absorbierende Material (10) dazu geeignet ist, einer Strahlenbelastung von mindestens 30 Gray pro Stunde standzuhalten.

15. System (2) nach einem der vorhergehenden Ansprüche, wobei das System (2) dazu eingerichtet ist, ein Verfahren zur Stabilisierung einer Kernschmelze durchzuführen, welches umfasst:
- einen Lagerungsschritt, in welchem das absorbierende Material (10) gelagert wird;
- einen Einbringungsschritt des Kühlmittels (26), in welchem die Kühlmittelzufuhrvorrichtung (8) das Kühlmittel (26), und insbesondere die vorbestimmte Menge an Kühlmittel, in den Raum (16) einbringt;
- einen Absorptionsschritt, in welchem das absorbierende Material (10) das Kühlmittel (26) absorbiert, wobei sich das absorbierende Material (10) bei Absorption des Kühlmittels (26) ausdehnt, und
- einen Stabilisierungsschritt, in welchem das absorbierende Material (10) mit der Schmelze (28) aus dem Reaktordruckbehälter (4) bei der Kernschmelze in Kontakt tritt.

## Claims

1. A system (2) for stabilizing a core meltdown in a nuclear power plant (1), comprising:
- a reactor pressure vessel (4) that contains a reactor core (12),
- a containment vessel (6) that defines a chamber (16) that is located underneath the reactor pressure vessel (4),
- a coolant supply device (8) that is configured to bring coolant (26) into the chamber (16) if a core meltdown is detected,
- an absorbent material (10) that is adapted to absorb the coolant (26) brought into the chamber (16),
**characterized in that** the absorbent material (10) is adapted to expand upon absorption of coolant (26).

2. A system (2) according to claim 1, in which the absorbent material (10) comprises a plurality of individual particles (34, 36), whereby each individual particle (34, 36) is adapted to expand upon absorption of coolant (26).

3. A system (2) according to claim 2 in which the absorbent material (10) in its dry state is a granular or powder material.

4. - A system (2) according to any one of the preceding claims, in which the absorbent material (10) is adapted to increase its volume at least tenfold upon absorbing the coolant.

5. A system (2) according to one of the claims 1 to 4, in which the absorbent material (10) is adapted to absorb a coolant volume (26) that is 10 to 500 times the volume of the absorbent material (10) in its dry state.

6. A system (2) according to any one of the preceding claims, in which the absorbent material (10) is adapted to accept a coolant mass (26) that is at least five times the mass of the absorbent material (10) in its dry state.

7. A system (2) according to any one of the preceding claims, in which the coolant supply device (8) is configured to introduce a predetermined volume of coolant (26) to the chamber (16) if a core meltdown is detected.

8. A system (2) according to claim 7, in which the absorbent material (10) is adapted to take in an initial volume in its dry state and a second volume in its swollen state in which the predetermined volume of coolant (26) is absorbed in the absorbent material (10), the second volume being at least ten times greater than the initial volume.

9. A system (2) according to claim 7 or 8, in which the absorbent material (10) is adapted to absorb the predetermined volume of coolant (26) within a time period of one minute to ten hours.

10. A system (2) according to any one of the preceding claims, in which the system (2) further includes a container (38) that contains the absorbent material (10).

11. A system (2) according to claim 10, in which the container (38) is sealable, preferentially hermetically sealable.

12. A system (2) according to one of the claims 10 or 11, in which the system (2) further comprises an opening mechanism (42) for opening the container (38), upon which the absorbent material (10) is adapted to flow out of the container (38) when the container (38) is opened.

13. A system (2) according to one of the claims 10 to 12, in which the absorbent material (10) is stored in the container (38) in a protective gas atmosphere (40), wherein the protective gas atmosphere (40) is adapted to protect the absorbent material from a chamber atmosphere of more than 70% relative humidity.

14. A system (2) according to any one of the preceding claims, in which the absorbent material (10) is adapted to withstand radiation exposure of at least 30 gray per hour.

15. A system (2) according to any one of the preceding claims, in which the system (2) is configured to perform a method of stabilization of a core meltdown, which comprises:
- a storage step in which the absorbent material (10) is stored;
- a coolant (26) introduction step in which the coolant supply device (8) brings the coolant (26), in particular the predetermined amount of coolant into the chamber (16);
- an absorption step in which the absorbent material (10) absorbs the coolant (26), upon which the absorbent material (10) expands upon absorption of the coolant (26), and
- a stabilization step in which the absorbent material (10) comes into contact with the molten material (28) from the reactor pressure vessel (4) during the core meltdown.

## Revendications

1. Système (2) de stabilisation d'une fusion du coeur dans une centrale nucléaire (1), comprenant :
- une cuve sous pression de réacteur (4), laquelle contient un coeur de réacteur (12),
- une cuve de sécurité (6), laquelle définit un espace (16), qui est disposé en dessous de la cuve sous pression de réacteur (4),
- un dispositif d'alimentation en fluide de refroidissement (8), qui est conçu pour introduire un fluide de refroidissement (26) dans l'espace (16) en cas de détection d'une fusion du coeur,
- un matériau absorbant (10), qui est adapté pour absorber le fluide de refroidissement (26) introduit dans l'espace (16),
**caractérisé en ce que** le matériau absorbant (10) est adapté pour se dilater lors de l'absorption du fluide de refroidissement (26).

2. Système (2) selon la revendication 1, dans lequel le matériau absorbant (10) comprend plusieurs particules individuelles (34, 36), dans lequel chaque particule individuelle (34, 36) est adaptée pour se dilater lors de l'absorption du fluide de refroidissement (26).

3. Système (2) selon la revendication 2, dans lequel le matériau absorbant (10) est un matériau granulaire ou pulvérulent à l'état sec.

4. Système (2) selon l'une quelconque des revendications précédentes, dans lequel le matériau absorbant (10) est adapté pour que son volume augmente au moins dix fois par absorption du fluide de refroidissement.

5. Système (2) selon l'une quelconque des revendications 1 à 4, dans lequel le matériau absorbant (10) est adapté pour absorber un volume de fluide de refroidissement (26), qui se situe entre dix fois et cinq cents fois le volume du matériau absorbant (10) à l'état sec.

6. Système (2) selon l'une quelconque des revendications précédentes, dans lequel le matériau absorbant (10) est adapté pour recevoir une masse de fluide de refroidissement (26), laquelle correspond à au moins cinq fois la masse du matériau absorbant (10) à l'état sec.

7. Système (2) selon l'une quelconque des revendications précédentes, dans lequel le dispositif d'alimentation en fluide de refroidissement (8) est conçu pour, en cas de détection d'une fusion du coeur, introduire un volume prédéterminé de fluide de refroidissement (26) dans l'espace (16).

8. Système (2) selon la revendication 7, dans lequel le matériau absorbant (10) est adapté pour occuper un premier volume dans un état sec, et dans un état gonflé, dans lequel le volume prédéterminé de fluide de refroidissement (26) est absorbé dans le matériau absorbant (10), pour occuper un second volume, dans lequel le second volume est au moins dix fois plus grand que le premier volume.

9. Système (2) selon la revendication 7 ou 8, dans lequel le matériau absorbant (10) est adapté pour absorber le volume prédéterminé de fluide de refroidissement (26) dans une période de temps comprise entre une minute et dix heures.

10. Système (2) selon l'une quelconque des revendications précédentes, dans lequel le système (2) comprend en outre une cuve (38), dans laquelle est contenu le matériau absorbant (10).

11. Système (2) selon la revendication 10, dans lequel la cuve (38) peut être fermée, et de préférence peut être fermée hermétiquement.

12. Système (2) selon l'une quelconque des revendications 10 ou 11, dans lequel le système (2) comprend en outre un mécanisme d'ouverture (42) pour ouvrir la cuve (38), dans lequel le matériau absorbant (10) est adapté pour s'écouler hors de la cuve (38) lors de l'ouverture de la cuve (38).

13. Système (2) selon l'une quelconque des revendications 10 à 12, dans lequel le matériau absorbant (10) est stocké dans la cuve (38) sous une atmosphère de gaz inerte (40), dans lequel l'atmosphère de gaz inerte (40) est adaptée pour protéger le matériau absorbant d'une atmosphère ambiante avec plus de 70 % d'humidité relative.

14. Système (2) selon l'une quelconque des revendications précédentes, dans lequel le matériau absorbant (10) est adapté pour résister à une exposition aux rayonnements d'au moins 30 Gray par heure.

15. Système (2) selon l'une quelconque des revendications précédentes, dans lequel le système (2) est conçu pour mettre en oeuvre un procédé de stabilisation d'une fusion du coeur, lequel comprend :
- une étape de stockage, dans laquelle le matériau absorbant (10) est stocké ;
- une étape d'introduction du fluide de refroidissement (26), dans laquelle le dispositif d'alimentation en fluide de refroidissement (8) introduit le fluide de refroidissement (26), et en particulier la quantité prédéterminée de fluide de refroidissement, dans l'espace (16) ;
- une étape d'absorption, dans laquelle le matériau absorbant (10) absorbe le fluide de refroidissement (26), dans lequel le matériau absorbant (10) se dilate lors de l'absorption du fluide de refroidissement (26), et
- une étape de stabilisation, dans laquelle le matériau absorbant (10) entre en contact avec la masse fondue (28) provenant de la cuve sous pression de réacteur (4) lors de la fusion du coeur.
